# EUROPÄISCHE PATENTSCHRIFT

(11) **EP 1 379 797 B1**
(45) Veröffentlichungstag und Bekanntmachung des Hinweises auf die Patenterteilung: **18.08.2004**
(21) Anmeldenummer: 02750858.9
(22) Anmeldetag: 16.04.2002
(51) Int. Cl.: F16H 63/20

(54) **EINWELLEN-SCHALTEINRICHTUNG**
SINGLE-SHAFT SWITCHING DEVICE
DISPOSITIF DE CHANGEMENT DE VITESSES A UN ARBRE

(30) Priorität: 20.04.2001 DE 10119343
(43) Veröffentlichungstag der Anmeldung: 14.01.2004
(73) Patentinhaber: ZF FRIEDRICHSHAFEN Aktiengesellschaft, 88038 Friedrichshafen (DE)
(72) Erfinder: HARTIG, Peter, Plymouth, MI 48170 (US); BÜRKLE, Martin, Canton, MI 48187 (US); FANNING, Andrew, Canton, MI 48187 (US)
(86) Internationale Anmeldenummer: PCT/EP2002/004178
(87) Internationale Veröffentlichungsnummer: WO 2003/008844

(56) Entgegenhaltungen:
- DE-A- 4 115 675
- US-A- 6 026 702
- PATENT ABSTRACTS OF JAPAN vol. 008, no. 248 (P-313), 14. November 1984 (1984-11-14) & JP 59 121414 A (TOYOTA JIDOSHA KK), 13. Juli 1984 (1984-07-13)

## Beschreibung

Die Erfindung betrifft eine Schalteinrichtung mit einer Schaltwelle nach dem Oberbeggriff von Anspruch 1, wie sie aus der DE-A-4 115 675 bekannt ist.

Zur Schaltung von Fahrzeuggetrieben sind weitere unterschiedliche Anordnungen bekannt geworden. So zeigt die US 6,026,702 eine Schalteinrichtung mit nur einer Schaltwelle für sechs Gangstufen, von denen eine Gangstufe eine Rückwärtsgangstufe sein kann. In die einzelnen Schaltgabeln greifen angefederte Stifte ein, mit denen die Schaltgabeln gegenüber dem Getriebegehäuse in einer festgelegten Position gesperrt werden können. Auf der Innenseite des teils der Schaltgabel, der auf der Schaltwelle angeordnet ist und den die Schaltwelle durchdringt, sind Öffnungen und Schlitze vorgesehen, in denen sich Stifte bewegen können. Dabei ist jeder Schaltgabel ein Stift zugeordnet, der durch Drehung der Schaltwelle so in die Schaltgabel eingreifen kann, daß in einer bestimmten Verdrehposition der Schaltwelle die Schaltgabel bei einer axialen Bewegung der Schaltwelle mitbewegt wird. Dazu wird von diesem Stift ein weiterer Stift, der als ein Sperrstift eine Sperrfunktion ausübt und im Getriebegehäuse sitzt, gegen den Druck einer Feder in das Getriebegehäuse hineingedrückt und gibt die Schaltgabel frei, so daß sie axial bewegt werden kann. Zur Durchdringung des Sperrstiftes muß in der Schaltgabel eine weitere Öffnung vorgesehen sein, so daß in der Schaltgabel neben den vier Schlitzen zur Führung des mit der Schaltwelle verbundenen Stiftes im nicht geschalteten Zustand der Schaltgabel, noch eine weitere Öffnung für diesen Sperrstift vorgesehen ist. Im Bereich dieser Öffnung ist die Schaltgabel dann auch noch in der Weise bearbeitet, daß der Sperrstift durch die Feder in drei verschiedene Vertiefungen gedrückt werden kann, die dem jeweiligen Schaltzustand der Schaltgabel entsprechen. Die aus hochwertigem Material hergestellte Schaltgabel, oder zumindest ihre Führung auf der Schaltwelle, muß also im Herstellungsstadium so bearbeitet werden, daß die vier Schlitze, die Öffnung für den Sperrstift und die Vertiefungen für den Sperrdstift eingebracht werden können. Dies bedeutet einen hohen fertigungstechnischen Aufwand, der sowohl zeitliche als auch finanzielle Ressourcen beansprucht.

Der Erfindung liegt die Aufgabe zugrunde, eine Schalteinrichtung aufzuzeigen, die einfach herstellbar ist und für unterschiedliche Schaltgabeln bzw. Schaltschwingen Verwendung finden kann.

Die Aufgabe wird gelöst durch eine Schalteinrichtung mit den Merkmalen des Anspruchs 1. Ausgestaltungen sind Gegenstand von Unteransprüchen.

Nach der Erfindung wird vorgeschlagen, für ein Fahrzeuggetriebe in einem Getriebegehäuse eine Schalteinrichtung darzustellen, die eine Schaltwelle für alle zu schaltenden Gangstufen umfaßt, und auf der wenigstens eine Schaltnabe verschiebbar abgeordnet ist. Innerhalb der Schaltnabe kann die Schaltwelle gedreht werden und weist dabei wenigstens einen Schaltstift auf, der mit der Schaltwelle um eine Drehachse verdrehbar ist. Dieser Schaltstift ist ebenfalls mit der Schaltwelle entlang der Drehachse verschiebbar. Je nach Drehung der Schaltwelle kann die Schaltwelle mit dem Schaltstift die Schaltnabe verschieben. Dabei ist der Schaltstift, der beim Schalten die ausgewählte Schaltnabe verschiebt, außerhalb der Schaltnabe angeordnet. Dadurch ist die innere Bohrung der Schaltnabe nur zur Führung der Schaltnabe auf der Schaltwelle bearbeitet und weist keinerlei Nuten oder Schlitze wie die Schaltgabeln nach dem Stand der Technik auf. Die Bearbeitung der Schaltnabe wird dadurch wesentlich vereinfacht und kann für jede Art von Schaltgabel oder Schaltschwinge in jeder Größe gleich gestaltet werden. Die Schaltgabel muß dazu lediglich mit der entsprechend gestalteten Schaltgabel der Schaltschwinge verbunden sein. Die Schaltnabe kann dazu mit einer Schaltgabel oder Schaltschwinge aus einem Stück gebildet sein, sie kann jedoch auch als separates Bauteil gefertigt werden und dann mit der Schaltgabel bzw. Schaltschwinge durch ein geeignetes Verfahren verbunden werden, beispielsweise verschweißt oder verschraubt werden. In einer vorteilhaften Ausgestaltung greift der Schaltstift in eine mit der Schaltnabe verbundene und aus der Schaltnabe herausragende Lasche ein, die auch Vertiefungen aufweisen kann, in die ein Rastelement in der jeweiligen Schaltstellung eingreift. Dieses Rastelement umfaßt vorteilhafterweise eine Spiralfeder, die sich gegen das Getriebegehäuse abstützt und dabei einen Kolben in die jeweilige Vertiefung drückt. Vorzugsweise ist die Lasche mit wenigstens einem Verbindungselement, beispielsweise einer Schraube oder einem Niet, an der Schaltnabe befestigt. In einer Ausgestaltungsform ist die Lasche direkt in die Schaltnabe eingegossen. In einer vorteilhaften Ausgestaltung weist die Schaltnabe an ihrer äußeren Oberfläche einen Schlitz auf, in dem eine Verriegelungseinrichtung gleitend angeordnet ist. Die Verriegelungseinrichtung umfaßt eine Gleitschiene, einen an der Gleitschiene angeordneten und in die Schaltnabe eingreifenden Sperrstift und eine dem Schaltstift gegenüberliegend an der Gleitschiene angeordnete Aufnahme für ein Federelement. Das Federelement stützt sich an dem Getriebegehäuse ab und drückt den an der Gleitschiene angeordneten Sperrstift in Richtung auf die Schaltnabe in eine Vertiefung, die in dem Schlitz der Schaltnabe ausgebildet ist. Vorzugsweise bildet die Aufnahme für das eine Hülse, in der eine Spiralfeder als Federelement angeordnet ist. In einer vorteilhaften Ausgestaltung betätigt der außerhalb der Schaltnabe liegende Schaltstift, der derjenigen Schaltnabe zugeordnet ist, die geschaltet werden soll, auch die Verriegelungseinrichtung an derjenigen Schaltnabe, die jeweils geschaltet werden soll. In einer besonders vorteilhaften Ausbildung sind alle Schaltnaben, alle Verriegelungseinrichtungen und alle aus der Schaltnabe herausragenden Laschen gleich gestaltet. Dadurch reduziert sich der Aufwand an verschiedenartigen Bauteilen in dem Getriebe erheblich. Die Schaltnabe kann vorteilhaft mit einer Schaltgabel oder mit einer Schaltschwinge verbunden sein oder ein Teil einer solchen Schaltgabel oder Schaltschwinge sein. In einer besonders vorteilhaften Ausgestaltung wird die Schaltnabe und gegebenenfalls die Schaltgabel oder die Schaltschwinge aus einem Kunststoff gebildet, während der Schaltstift in der Schaltwelle, die Lasche und die Verriegelungseinrichtung aus Metall besteht.

Ein wesentlicher Vorteil der Schalteinrichtung besteht in ihrem modularen Aufbau. Dadurch lassen sich die aus der Schaltnabe herausragende Lasche, die Verriegelungseinrichtung, die Gangrastierung, der Schaltstift, die Lagerung der Schaltwelle und gegebenenfalls die Schaltnabe für jede Art von Schaltgetriebe nutzen. Nur die Länge der Schaltwelle, die Anordnung der Schaltstifte auf der Schaltwelle und die jeweiligen Schaltgabeln bzw. Schaltschwingen, entweder als ein vollständiges Element, das auf der Schaltwelle angeordnet ist, oder als Teilelement, das mit der Schaltnabe verbunden ist, müssen gewechselt und den jeweiligen Bedürfnissen angepaßt werden.

Die Erfindung wird anhand einer Zeichnung näher beschrieben:
Es zeigen:
- Fig. 1: eine Seitenansicht der Schalteinrichtung;
- Fig. 2: eine Sicht auf die Schalteinrichtung;
- Fig. 3: einen Schnitt durch eine geschaltete Schaltgabel;
- Fig. 4: einen Schnitt durch eine nicht geschaltete Schaltgabel;
- Fig. 5: eine Sicht auf eine Lasche;
- Fig. 6: eine Seitenansicht einer Lasche;
- Fig. 7: eine Verriegelungseinrichtung und
- Fig. 8: einen Schaltstift.

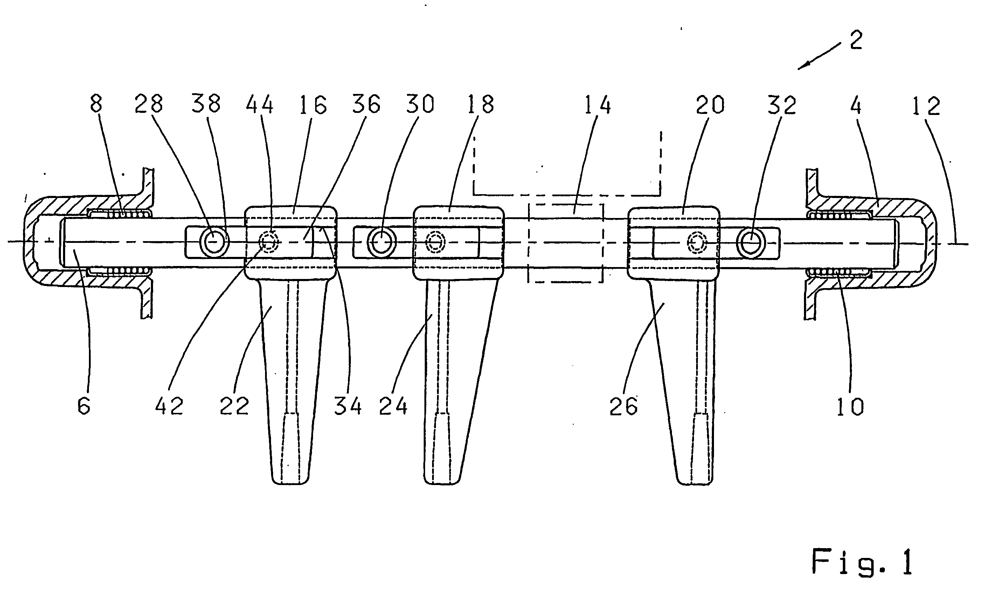

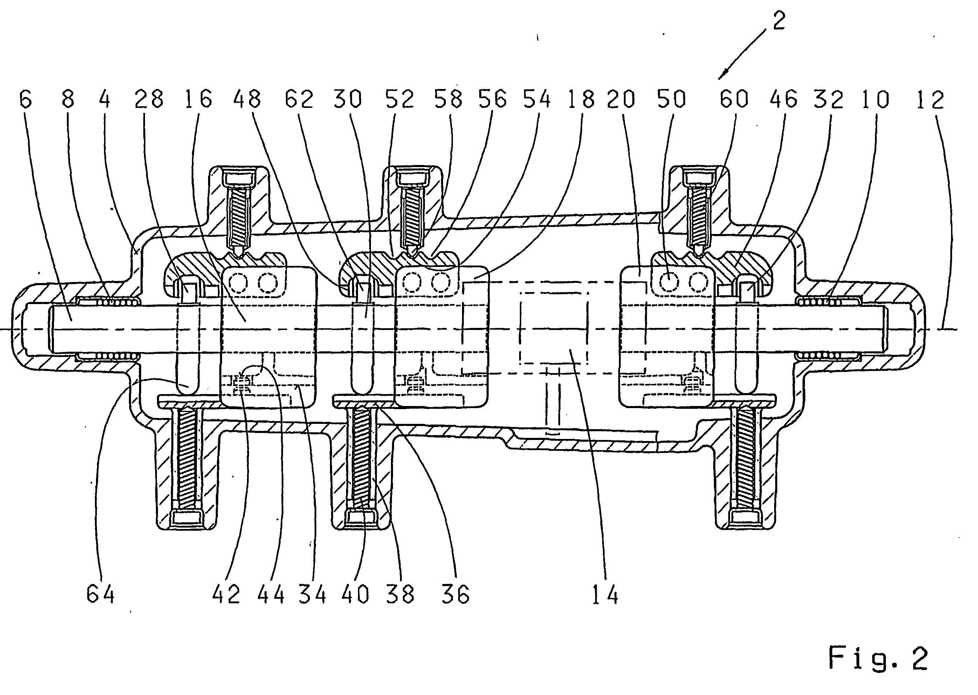

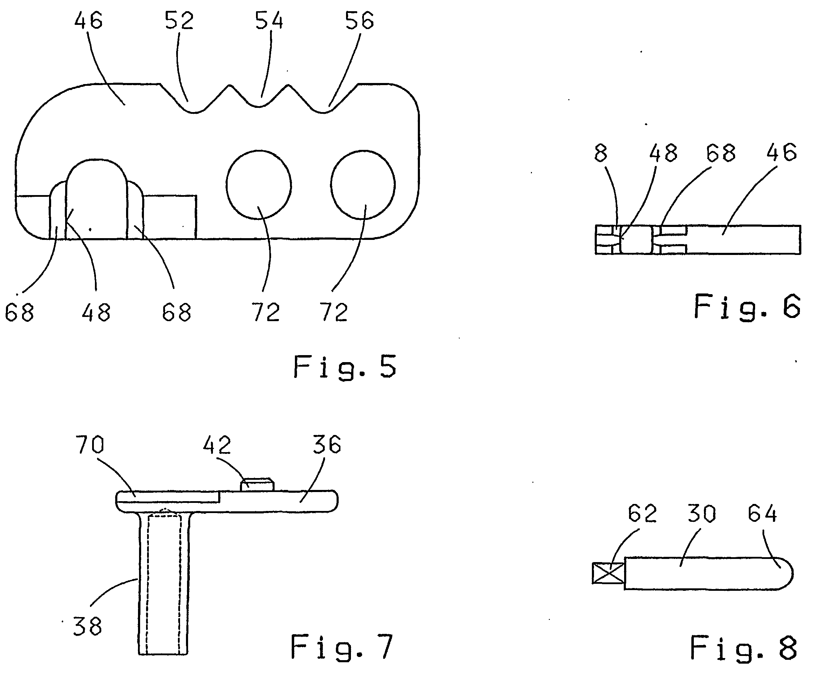

Die Fig. 1 zeigt in einer Seitenansicht die Schalteinrichtung 2 in einem nicht näher dargestellten Getriebegehäuse 4. Eine Schaltwelle 6 ist in zwei Lagerungen 8 und 10 in dem Getriebegehäuse 4 derart gelagert, daß sich die Schaltwelle 6 um eine Rotationsachse 12 verdrehen läßt und entlang der Rotationsachse 12 axial verschieben läßt, wozu im Getriebegehäuse 4 ausreichend große Öffnungen vorgesehen sind. Die Schaltwelle 6 wird von einem nicht näher dargestellten Schaltmechanismus 14 gedreht und verschoben, der mit einem nicht gezeigten Handschalthebel oder einem automatisierten Aktuator verbunden ist. Auf der Schaltwelle sind drei Schaltnaben 16, 18 und 20 angeordnet, die in dem hier gezeigten Beispiels einstückig mit drei Schaltgabeln 22, 24 und 26 ausgebildet sind. Die Schaltwelle wird von drei Schaltstiften 28, 30 und 32 durchdrungen, wie sie in der Fig. 8 und der Fig. 2 näher dargestellt sind. Jeder Schaltnabe 22, 24, 26 ist ein Schaltstift 28, 30 32 zugeordnet, wobei der jeweilige Schaltstift nicht innerhalb der zugeordnete Schaltnabe angeordnet ist, sondern sich außerhalb der zugeordnete Schaltnabe in einer gewissen Entfernung zur Schaltnabe befindet. In einem Schlitz 34 an der Schaltnabe 16 befindet sich eine Gleitschiene 36, wobei sich die Schaltnabe 16 axial entlang der Achse 12 bewegen läßt und die Gleitschiene 36 über eine Hülse 38 axial fest im Getriebegehäuse gehalten wird. Eine innerhalb der Hülse 38 angeordnete Spiralfeder 40 (Fig.2) drückt die Gleitschiene 36 in Richtung auf die Schaltnabe 16, d.h. in der Fig. 1 in der Richtung senkrecht zur Zeichnungsebene. An der Gleitschiene 36 ist ein Sperrstift 42 angeordnet, der in eine Vertiefung 44 an der Schaltnabe 16 eingreifen kann und dadurch die axiale Bewegung der Schaltnabe 16 verhindert. Die anderen gezeigten Schaltnaben 18 und 20 weisen entsprechende Einrichtungen auf, die Darstellungen zur Schaltnabe 16 sind dafür stellvertretend.

In der Fig. 2 ist beispielgebend für alle Schaltnaben eine an der Schaltnabe 18 angeordnete Lasche 46 dargestellt, wie sie in der Fig. 5 und der Fig. 6 näher gezeigt ist. Die Lasche 46 ist an der Schaltnabe 18 befestigt und mit dieser gemeinsam verschiebbar. Die Befestigung wird beispielsweise unmittelbar beim Herstellungsprozess der Schaltnabe hergestellt, indem die Lasche 46 mit der Schaltnabe 18 vergossen wird, oder die Lasche wird mit Befestigungselementen, beispielsweise mit Schrauben 50 an der Schaltnabe 18 befestigt. Die Lasche 46 kann dabei beispielsweise aus einem Sintermetallwerkstoff bestehen. Die Lasche 46 weist eine Öffnung 48 auf, in die der Schaltstift 30 eingreifen kann und durch die hindurch der Schaltstift 30 bei einer Verdrehung der Schaltwelle 6 geführt werden kann. In der Lasche 46 sind drei Vertiefungen 52, 54 und 56 vorgesehen, in die der Kolben 58 einer Rasteinrichtung wahlweise eingreifen kann. In der in der Fig. 2 gezeigten Stellung greift der Kolben 58 in die Vertiefung 54, die einer Mittelstellung oder Neutralstellung der Schaltnabe 18 entspricht. In dieser Stellung ist durch die Schaltnabe 18 kein Gang geschaltet. Die danebenliegenden Vertiefungen 52 und 56 entsprechen den beiden gegenüberliegenden Schaltpositionen einer Schaltgasse. In diesen Positionen wird die Schaltnabe 18 und dadurch die damit verbundene Schaltgabel bzw. Schaltschwinge durch den Kolben 58 gehalten. Dazu wird der Kolben 58 durch eine Spiralfeder 60, die sich gegen das Getriebegehäuse 4 abstützt in die jeweilige Vertiefung gedrückt. Zur axialen Bewegung der Lasche 46 und der Schaltnabe 18 muß die Federkraft der Spiralfeder 60 überwunden werden. In einer Verdrehposition der Schaltwelle 6 steht der Schaltstift 30 mit einer Spitze 62 genau in der Öffnung 48 der Lasche 46. Wird die Schaltwelle 6 nun axial entlang der Achse 12 bewegt, so nimmt der Schaltstift 30 mit seiner Spitze 62 die Lasche 46 in der Bewegungsrichtung der Schaltwelle 6 mit. Bei der axialen Bewegung der Lasche 46 wird der Kolben 58 aus einer der Vertiefungen heraus gegen die Federkraft der Spiralfeder 60 gedrückt und gibt dabei die Lasche 46 frei. Anschließend rutscht der Kolben 58 in die benachbarte Vertiefung hinein, nachdem die Lasche 46 sich axial soweit bewegt hat, wie der Abstand der Vertiefungen vorgibt.
In der Verdrehposition des Schaltstiftes 30, in der er in der Lage ist, die Lasche 46 axial zu bewegen, drückt die andere Spitze 64 des Schaltstiftes 30, die der Spitze 62 gegenüber angeordnet ist, die Gleitschiene 36 gegen die Federkraft der Spiralfeder 40 zurück in Richtung Getriebegehäuse 4. Dadurch wird der Sperrstift 42 aus der Vertiefung 44 herausgedrückt und gibt die Schaltnabe 18 zur axialen Bewegung frei. Der Schaltstift 30 dient also gleichzeitig der Schaltung des gewünschten Ganges und der Entsperrung der zu schaltenden Schaltnabe.

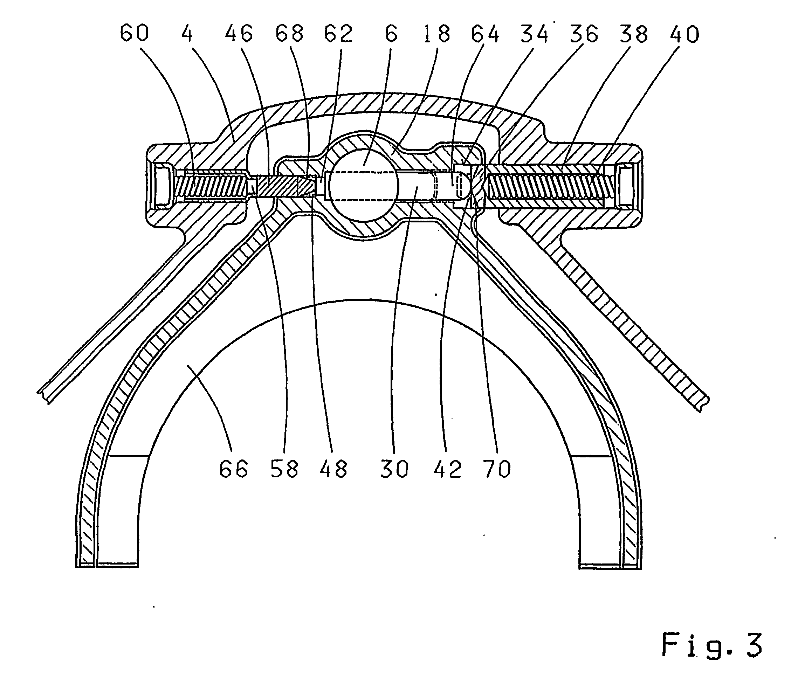

Die Fig. 3 zeigt eine Schaltgabel 66, die hier einstückig mit der Schaltnabe 18 gebildet ist. Die Schaltwelle 6 ist so gedreht, daß in der gezeigten Position die Schaltnabe 18 von der Schaltwelle 6 senkrecht zur Zeichnungsebene verschoben werden kann. Die Spitze 62 des waagerecht liegenden Schaltstiftes 30 greift in die Lasche 46 ein, und die Spitze 64 des Schaltstiftes 30 drückt die Gleitschiene 36 mit der Hülse 36 in der Zeichnungsebene nach rechts gegen die Feder 40. Dadurch greift der Sperrstift 42 nicht mehr in die Schaltnabe 18 ein, sondern liegt frei in dem Schlitz 44. Die Öffnung 48 an der Lasche 46, in die der Schaltstift 30 mit seiner Spitze 62 eingreift, weist abgeschrägte Flächen 68 auf, so daß die Spitze 62 leichter in die Öffnung 48 einfädeln kann. Ebenso weist die Gleitschiene 36 im Bereich der Spitze 64 des Schaltstiftes 30 abgeschrägte Flächen 70 auf, damit die Spitze 64 bei der Verdrehung der Schaltwelle 6 leichter die Gleitschiene 36 zurück drücken kann.

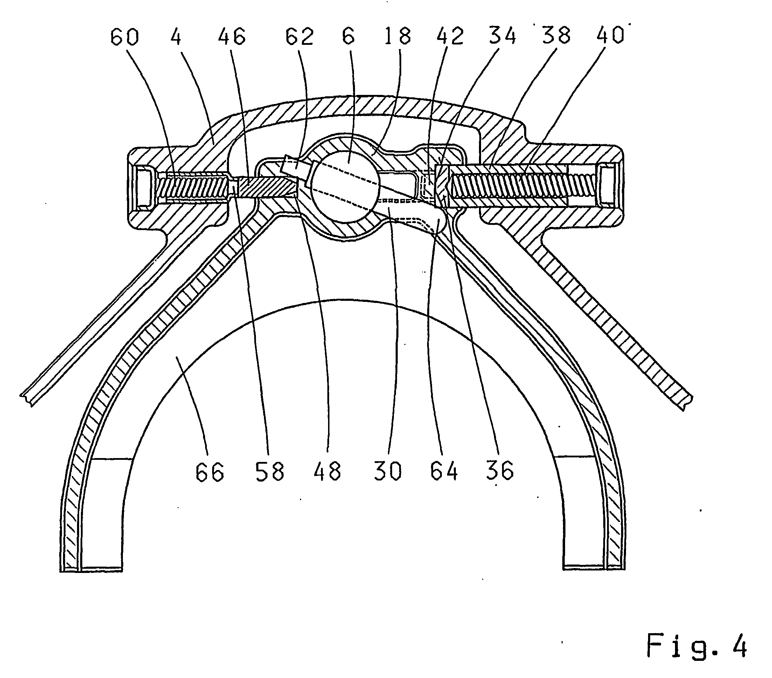

Die Fig. 4 zeigt die Anordnung nach der Fig. 3 mit einer dazu gedrehten Schaltwelle 6. Die Spitze 62 liegt nicht mehr in der Öffnung 48 und die Spitze 64 des Schaltstiftes 30 drückt nicht mehr auf die Gleitschiene 36. Dadurch rastet der Sperrstift 42 in die Schaltnabe 18 ein und blockiert deren axiale Bewegungsfreiheit. In dieser Position kann die Schaltnabe 18 nicht von der Schaltwelle 6 senkrecht zur Zeichnungsebene bewegt werden, sondern ist relativ zum Getriebegehäuse verriegelt.

Die Fig. 5 und die Fig. 6 zeigen eine teilweise vergrößerte Darstellung der Lasche 46. An der Öffnung 48 sind abgeschrägte Flächen 68 vorgesehen. Zur Rastierung der Schaltnabe sind Vertiefungen 52, 54 und 56 vorgesehen. Durch die Öffnungen 72 können Verschraubungen geführt werden, um die Lasche 46 an einer Schaltnabe zu befestigen.

Die Fig. 7 zeigt die Verriegelungseinrichtung mit der Gleitschiene 36, die einen Sperrstift 42 und eine Hülle 38 aufweist, in der eine hier nicht gezeigte Spiralfeder liegt. Die Gleitschiene 36 weist zwei abgeschrägte Flächen 70 auf, damit die Gleitschiene 36 leichter von einer Spitze 64 am Schaltstift 30 zurück gedrückt werden kann.

Die Fig. 8 zeigt einen Schaltstift 30 mit einer Spitze 62, die in die Lasche 46 eingreift, und mit einer Spitze 64, die auf die Gleitschiene 36 drückt.

### Bezugszeichen

- 2: Schalteinrichtung
- 4: Getriebegehäuse
- 6: Schaltwelle
- 8: Lagerung
- 10: Lagerung
- 12: Rotationsachse
- 14: Schaltmechanismus
- 16: Schaltnabe
- 18: Schaltnabe
- 20: Schaltnabe
- 22: Schaltgabel
- 24: Schaltgabel
- 26: Schaltgabel
- 28: Schaltstift
- 30: Schaltstift
- 32: Schaltstift
- 34: Schlitz
- 36: Gleitschiene
- 38: Hülse
- 40: Spiralfeder
- 42: Sperrstift
- 44: Vertiefung
- 48: Öffnung
- 50: Schraube
- 52: Vertiefung
- 54: Vertiefung
- 56: Vertiefung
- 58: Kolben
- 60: Spiralfeder
- 62: Spitze
- 64: Spitze
- 66: Schaltgabel
- 68: Fläche
- 70: Fläche
- 72: Öffnung

## Patentansprüche

1. Schalteinrichtung (2) für ein Fahrzeuggetriebe in einem Getriebegehäuse (4), die eine Schaltwelle (6) umfaßt, auf der Schaltnaben (18) verschiebbar abgeordnet sind, und die wenigstens einen außerhalb einer der Schaltnaben (18) angeordneten Schaltstift (30) aufweist, der mit der Schaltwelle (6) um eine Drehachse (12) verdrehbar ist und mit der Schaltwelle (6) entlang der Drehachse (12) verschiebbar ist, und der dabei, je nach Drehung der Schaltwelle (6), eine der Schaltnaben (18) mit der Schaltwelle verschiebt (6), wobei der Schaltstift (30) in eine mit der Schaltnabe (18) verbundene und aus der Schaltnabe (18) herausragende Lasche (46) eingreift, **dadurch gekennzeichnet, dass** der außerhalb der Schaltnabe (18) liegende Schaltstift (30), der derjenigen Schaltnabe (18) zugeordnet ist, die geschaltet werden soll, eine Verriegelungseinrichtung (36, 38, 42) an derjenigen Schaltnabe (18) betätigt, die jeweils geschaltet werden soll.

2. Schalteinrichtung (2) nach Anspruch 1, **dadurch gekennzeichnet, dass** die Schaltnabe (18) an ihrer äußeren Oberfläche einen Schlitz (34) aufweist, in dem die Verriegelungseinrichtung (36, 38, 42) gleitend angeordnet ist.

3. Schalteinrichtung (2) nach Anspruch 1 oder 2, **dadurch gekennzeichnet, dass** die Verriegelungseinrichtung eine Gleitschiene (36), einen an der Gleitschiene (36) angeordneten und in die Schaltnabe (18) eingreifenden Sperrstift (42) und eine dem Schaltstift (30) gegenüber an der Gleitschiene (36) angeordnete Aufnahme (38) für ein Federelement (40) umfaßt, das sich an dem Getriebegehäuse (4) abstützt und den an der Gleitschiene (36) angeordneten Sperrstift (42) in Richtung auf die Schaltnabe (18) drückt.

4. Schalteinrichtung (2) nach Anspruch 3, **dadurch gekennzeichnet, dass** die Aufnahme für das Federelement eine Hülse (38) bildet, in der eine Spiralfeder (40) angeordnet ist.

5. Schalteinrichtung (2) nach einem der Ansprüche 1 bis 4, **dadurch gekennzeichnet, dass** die aus der Schaltnabe (18) herausragende Lasche (46) Vertiefungen (52, 54, 56) aufweist, in die ein Rastelement (58, 60) in der jeweiligen Schaltstellung eingreift.

6. Schalteinrichtung (2) nach Anspruch 5, **dadurch gekennzeichnet, dass** das Rastelement eine Spiralfeder (60) umfaßt, die sich gegen das Getriebegehäuse (4) abstützt und einen Kolben (58) in die jeweilige Vertiefung (52, 54, 56) drückt.

7. Schalteinrichtung (2) nach einem der Ansprüche 1 bis 6, **dadurch gekennzeichnet, dass** die Lasche (46) mit wenigstens einem Verbindungselement (50) an der Schaltnabe (18) befestigt ist.

8. Schalteinrichtung (2) nach einem der Ansprüche 1 bis 6, **dadurch gekennzeichnet, dass** die Lasche (46) direkt in die Schaltnabe (18) eingegossen ist.

9. Schalteinrichtung (2) nach einem der Ansprüche 1 bis 8, **dadurch gekennzeichnet, dass** die Schaltnabe (18) aus einem Kunststoff gebildet ist und die Lasche (46), der Schaltstift (30) in der Schaltwelle (6) und die Verriegelungseinrichtung (36, 38, 42) aus Metall besteht.

10. Schalteinrichtung (2) nach einem der Ansprüche 1 bis 9, **dadurch gekennzeichnet, dass** die Schaltnabe (18) mit einer Schaltgabel (66) verbunden oder Teil einer Schaltgabel (66) ist.

11. Schalteinrichtung (2) nach einem der Ansprüche 1 bis 9, **dadurch gekennzeichnet, dass** die Schaltnabe (18) mit einer Schaltschwinge verbunden oder Teil einer Schaltschwinge ist.

12. Schalteinrichtung (2) nach einem der Ansprüche 1 bis 9, **dadurch gekennzeichnet, dass** alle Schaltnaben (16, 18, 20), alle Verriegelungseinrichtungen (36, 38, 42) und alle Laschen (46) jeweils gleich ausgebildet sind.

13. Schaltnabe (18) für ein Fahrzeuggetriebe mit einer Schaltwelle (6), wobei die Schaltnabe (18) mit einer Schaltgabel (66) oder einer Schaltschwinge verbunden oder die von einer Schaltgabel (66) oder Schaltschwinge einstückig umfaßt ist, und an der eine aus der Schaltnabe (18) herausragende Lasche (46) vorgesehen ist, die zur Schaltung des Fahrzeuggetriebes mit einem Schaltstift (30) an der Schaltwelle (60) außerhalb der Schaltnabe (18) verbindbar ist, **dadurch gekennzeichnet, dass** an der Oberfläche der Schaltnabe -(18) Elemente (34, 44) einer Verriegelungseinrichtung vorgesehen sind, die von dem Schaltstift (30) betätigbar sind.

14. Schaltnabe (18) nach Anspruch 13, **dadurch gekennzeichnet, dass** die aus der Schaltnabe (18) herausragende Lasche (46) Vertiefungen (52, 54, 56) aufweist, in die ein Rastelement (58, 60) in der jeweiligen Schaltstellung eingreift.

15. Schaltnabe nach Anspruch 13, **dadurch gekennzeichnet, dass** die Elemente der Verriegelungseinrichtung einen Schlitz (34) und eine Vertiefung (44) Umfassen.

## Claims

1. The invention relates to a switching device (2) for a vehicle transmission in a transmission housing (4), which comprises a selector shaft (6), with sliding shift hubs (18) arranged on it, and, arranged outside one of the shift hubs (18), at least one selector pin (30), which together with the selector shaft (6) rotates around an axis of rotation (12) and together with the selector shaft (6) slides along the axis of rotation (12), and which - depending on the rotation of the selector shaft (6) - in the process displaces one of the shift hubs (18) with the selector shaft (6), with the selector pin (30) engaging with a shackle (46) linked to and protruding from the shift hub (18), **characterized in that** the shift-hub(18)-external selector pin (30), which is assigned to the shift hub (18) to be shifted, actuates a locking device (36, 38, 42) on the shift hub (18) to be shifted.

2. Switching device (2) according to claim 1, **characterized in that** the shift hub (18) on its outer surface features a slot (34) in which the locking device (36, 38, 42) slides.

3. Switching device (2) according to claim 1 or 2, **characterized in that** the locking device comprises a slide rail (36), a locking pin (42) arranged on the slide rail (36) and engaging with the shift hub (18), and a fixture (38) for a spring element (40) arranged on the slide rail (36) opposite to the selector pin (30), with the spring element being supported on the transmission housing (4) and pressing the locking pin (42) arranged on the slide rail (36) toward the shift hub (18).

4. Switching device (2) according to claim 3, **characterized in that** the fixture for the spring element constitutes a sleeve (38) in which a spiral spring (40) is arranged.

5. Switching device (2) according to one of the claims 1 through 5, **characterized in that** the shackle (46) protruding from the shift hub (18) features recesses (52, 54, 56) with which a locking piece (58, 60) engages in the shifting positions.

6. Switching device (2) according to claim 5, **characterized in that** the locking piece comprises a spiral spring (60), which is supported by the transmission housing (4) and presses a piston (58) into the recesses (52, 54, 56).

7. Switching device (2) according to one of the claims 1 through 6, **characterized in that** the shackle (46) is fixed to at least one fastener (50) on the shift hub (18).

8. Switching device (2) according to one of the claims 1 through 6, **characterized in that** the shackle (46) is cast in the shift hub (18).

9. Switching device (2) according to one of the claims 1 through 8, **characterized in that** the shift hub (18) is made of plastic and the shackle (46), the selector pin (30) in the selector shaft (6) and the locking piece (36, 38, 42) are made of metal.

10. Switching device (2) according to one of the claims 1 through 9, **characterized in that** the shift hub (18) is linked to a shift fork (66) or is part of a shift fork (66).

11. Switching device (2) according to one of the claims 1 through 9, **characterized in that** the shift hub (18) is linked to a shift lever or is part of a shift lever.

12. Switching device (2) according to one of the claims 1 through 9, **characterized in that** all shift hubs (16, 18, 20), all locking pieces (36, 38, 42) and all shackles (46) are of the same design.

13. Shift hub (18) for a vehicle transmission with a selector shaft (6), with the shift hub (18) being linked to a shift fork (66) or a shift lever or being embraced by a one-piece shift fork (66) or shift lever, and on which a shackle (46) protruding from the shift hub (18) is provided, which for shifting the vehicle transmission can be linked to a selector pin (30) on the selector shaft (60) outside the shift hub (18), **characterized in that** on the surface of the shift hub (18) there are elements (34, 44) of a locking device, which can be actuated by the selector pin (30).

14. Shift hub (18) according to claim 13, **characterized in that** the shackle (46) protruding from the shift hub (18) features recesses (52, 54, 56), with which a locking piece (58, 60) engages in the shifting positions.

15. Shift hub according to claim 13 **characterized in that** the elements of the locking device enclose a slot (34) and a recess (44).

## Revendications

1. Dispositif de changement de vitesses (2) pour une boîte de vitesses d'un véhicule, logé dans un carter de boîte de vitesses (4), laquelle est dotée d'un arbre de commande (6) sur lequel sont situés des moyeux de commande (18) coulissants, et lequel comporte au moins un axe de commande (30) situé hors des moyeux de commande (18), cet axe de commande étant pivotable autour d'une axe de rotation (12) à l'aide de l'arbre de commande (6) et coulissable le long de l'axe de rotation (12) à l'aide de l'arbre de commande (6), et sachant que cet axe de commande peut déplacer, en fonction de la rotation de l'arbre de commande (6), un des moyeux de commande (18) avec l'arbre de commande (6), sachant que l'axe de commande (30) s'engage dans une attache (46) liée au moyeu de commande (18) et sortant du moyeu de commande (18), **caractérisé en ce que** l'axe de commande (30) se trouvant hors du moyeu de commande (18), qui est associé au moyeu de commande (18) qui doit être enclenché, actionne un dispositif de verrouillage (36, 38, 42) sur le moyeu de commande (18) qui doit être enclenché.

2. Dispositif de changement de vitesses (2) selon la revendication 1, **caractérisé en ce que** le moyeu de commande (18) comporte sur sa surface extérieure une entaille (34) dans laquelle est logé, de manière coulissante, le dispositif de verrouillage (36, 38, 42).

3. Dispositif de changement de vitesses (2) selon une des revendications 1 ou 2, **caractérisé en ce que** le dispositif de verrouillage comprend une glissière (36), un axe de verrouillage (42) disposé sur la glissière (36) et s'enclenchant dans le moyeu de commande (18), et un logement (3 8) pour un élément élastique (40) se trouvant du côté opposé à l'axe de commande (30) sur la glissière (36), sachant que cet élément élastique appuie sur le carter de boîte de vitesses (4) et qu'il pousse l'axe de verrouillage (42), disposé sur la glissière (36), vers le moyeu de commande (18).

4. Dispositif de changement de vitesses (2) selon la revendication 3, **caractérisé en ce que** le logement de l'élément élastique forme une douille (38) dans laquelle est logé un ressort en spirale (40).

5. Dispositif de changement de vitesses (2) selon une des revendications 1 à 4, **caractérisé en ce que** l'attache (46) sortant du moyeu de commande (18) comporte des encoches (52, 54, 56) dans lesquelles s'insère - dans la position de commande sélectionnée - respectivement un des éléments de verrouillage (58, 60).

6. Dispositif de changement de vitesses (2) selon la revendication 5, **caractérisé en ce que** l'élément de verrouillage comprend un ressort en spirale (60), appuyant contre le carter de boîte de vitesses (4) et poussant un piston (58) dans l'évidement (52, 54, 56) correspondant.

7. Dispositif de changement de vitesses (2) selon une des revendications 1 à 6, **caractérisé en ce que** l'attache (46) est liée au moins avec un élément de fixation (50) au moyeu de commande (18).

8. Dispositif de changement de vitesses (2) selon une des revendications 1 à 6, **caractérisé en ce que** l'attache (46) est coulée directement dans le moyeu de commande (18).

9. Dispositif de changement de vitesses (2) selon une des revendications 1 à 8, **caractérisé en ce que** le moyeu de commande (18) est fait d'une matière plastique et **en ce que** l'attache (46), l'axe de commande (30) dans l'arbre de commande (6) et le dispositif de verrouillage (36, 38,42) sont faits de métal.

10. Dispositif de changement de vitesses (2) selon une des revendications 1 à 9, **caractérisé en ce que** le moyeu de commande (18) est lié à une fourchette de commande (66) ou **en ce qu'**il est une partie d'une fourchette de commande (66).

11. Dispositif de changement de vitesses (2) selon une des revendications 1 à 9, **caractérisé en ce que** le moyeu de commande (18) est lié à une fourchette de sélection ou **en ce qu'**il est une partie d'une fourchette de sélection.

12. Dispositif de changement de vitesses (2) selon une des revendications 1 à 9, **caractérisé en ce que** tous les moyeux de commande (16, 18, 20), tous les dispositifs de verrouillage (36, 38, 42) et toutes les attaches (46) sont, respectivement, de forme identique.

13. Moyeu de commande (18) pour une boîte de vitesses de véhicule dotée d'un arbre de commande (6), sachant que le moyeu de commande (18) est lié à une fourchette de commande (66) ou à une fourchette de sélection, ou qu'il est enveloppé, solidairement, d'une fourchette de commande (66) ou d'une fourchette de sélection, et sur lequel est prévu une attache (46) sortant du moyeu de commande (18), laquelle peut être liée à un axe de commande (30) logé sur l'arbre de commande (60) hors du moyeu de commande (18), afin de pouvoir passer les rapports de la boîte de vitesses d'un véhicule, **caractérisé en ce que** sur la surface du moyeu de commande (18) sont prévus les éléments (34, 44) d'un dispositif de verrouillage, lesquels peuvent être actionnés par l'axe de commande (30).

14. Moyeu de commande (18) selon la revendication 13, **caractérisé en ce que** l'attache (46) sortant du moyeu de commande (18) comprend des encoches (52, 54, 56) dans lesquelles s'insère - dans la position de commande sélectionnée - respectivement un des éléments de verrouillage (58, 60).

15. Moyeu de commande (18) selon la revendication 13, **caractérisé en ce que** les éléments du dispositif de verrouillage comprennent une entaille (34) et une encoche (44).
